# EUROPEAN PATENT SPECIFICATION

(11) **EP 3 583 046 B1**
(45) Date of publication and mention of the grant of the patent: **15.12.2021**
(21) Application number: 17835909.7
(22) Date of filing: 28.12.2017
(51) Int. Cl.: B65D 77/06, B65D 81/34

(54) **PACKAGED FOOD PRODUCT WITH VEGETABLE COMPONENTS**
VERPACKTES LEBENSMITTELPRODUKT MIT PFLANZLICHEN KOMPONENTEN
PRODUIT ALIMENTAIRE EMBALLÉ À BASE DE LÉGUMES

(30) Priority: 14.02.2017 US 201715432883
(43) Date of publication of application: 25.12.2019
(73) Proprietor: Kraft Foods Group Brands LLC, Chicago, IL 60601 (US)
(72) Inventor: BROWN, Rachel Catherine, Evanston, Illinois 60201 (US); HARRIS, William Matthew, Broomfield, Colorado 80020 (US); LOPEZ, Josue R. Juarbe, Evanston, Illinois 60202 (US); PUTNAM, Michael David, Chicago, Illinois 60647 (US); ROMAN, Linda C., Palatine, Illinois 60074 (US); BANDOH, Kwaku, Round Lake, Illinois 60073 (US)
(74) Representative: Boult Wade Tennant LLP
(86) International application number: PCT/US2017/068676
(87) International publication number: WO 2018/151793

(56) References cited:
- FR-A1- 2 536 251
- JP-A- 2000 062 857
- US-A- 4 910 036
- US-A- 5 674 546
- US-A1- 2010 282 636
- US-A1- 2013 284 726

## Description

### Field

This application relates generally to food products, and more specifically to microwavable food products that include vegetable components, and processes for maintaining freshness of vegetable components.

### Background

Omelets and scrambled egg items that include meats and vegetables are often prepared by manually dicing meat ingredients and fresh vegetables. Such processes tend to be labor-intensive, and often result in leftover portions of various ingredients requiring storage for later use, or being wasted. A packaged food product comprising components suitable for making one or more individual omelets or other egg-based entrées has been thought to be useful. However, development of a high quality, nutritious product suitable for high-volume commercial production and sale has proven challenging. In addition to addressing problems generally applicable to development and production of packaged food products, e.g., cost control, quality control, shelf-stability, avoidance of unduly high mass or volume of packaging materials, etc., provision of vegetable items suitable for inclusion in such a product must address particularly challenging organoleptic issues.

US2014284726 discloses a meal kit for microwave cooking of a multi-component food product that includes at least two sealed packages of ingredients for the multi-component food product.

### Summary

The present invention provides a packaged food product as set out in claim 1, methods of making a microwaved food product using the packaged food product as set out in claims 5 and 9 and a method assembling the packaged food product as set out in claim 14. In some embodiments, the packaged food product comprises a cup containing multiple ingredients in sealed pouches suitable for use in making an egg-based food item or entrée with similarities to an omelet, breakfast scramble, or other egg-based entrées, with the cup being suitable for microwave cooking of an egg-based food item. In some embodiments, the ingredients include vegetable components that offer organoleptic properties similar to those of fresh vegetables after an extended period of time. Preferably, time required for processing, shipment, storage, etc., which may be, e.g., several weeks, may pass without unacceptable degradation of taste, texture, mouth feel, flavor, aroma, color, nutritional content or other important qualities. In some embodiments, the ingredients may also include additional components, such as, for example, one or more meats, e.g., ham, sausage, bacon, Canadian bacon or the like; one or more cheeses; and/or mushrooms. The packaged food product may be provided with or without a liquid egg component.

In some embodiments, the packaged food product may include instructions for the consumer to perform some or all of the following steps, either in the order set forth below or in a different order:
1. Remove or otherwise open a lid of the cup
2. Remove the pouches from the cup
3. Add an egg to the cup, e.g., by cracking a fresh egg (not provided with the packaged food product) and adding the liquid egg component to the cup
4. Mix or stir the egg in the cup (either before or after step 5)
5. Open the pouches and add some or all of the pouch contents to the cup
6. Heat or cook the contents of the cup, e.g., by placing the cup in a microwave oven
7. Add a component such as shredded cheese, from one of the pouches or from another source, during and/or after microwave heating

In some embodiments, vegetable components are prepared by the following process:
blanching the vegetable pieces for a predetermined period of time at a temperature effective to inhibit enzyme action detrimental to organoleptic properties, and to have an antimicrobial effect;
acidifying the vegetable pieces in acid media for a period of time sufficient to have a further antimicrobial effect without unacceptably affecting organoleptic properties;
freezing the vegetable pieces to a temperature of below -15°C (5°F) using an IQF technique;
sealing the frozen vegetable pieces in containers;
storing the vegetable pieces;
thawing the vegetable pieces; and
subjecting the vegetables to an HPP process;
wherein the process enables freshness of the vegetable pieces to be maintained in the sealed containers at refrigerated temperatures for 75 to 90 days.

In some embodiments, the vegetable pieces are acidified during or after blanching. In some embodiments, acidifying the vegetable pieces comprises immersing the vegetable pieces in acid media. In some embodiments, the vegetable pieces comprise diced vegetable pieces, each having a minimum dimension greater than about 0.32 cm (1/8 inch), and a maximum dimension of less than 2.22 cm (7/8 inch). In some embodiments, the vegetable pieces comprise diced potato pieces having dimensions of about 0.64 cm x 0.95 cm x 0.95 cm (1/4 inch x 3/8 inch x 3/8 inch), and other vegetable pieces having dimensions of about 0.95 cm x 0.95 cm. 0.95cm (3/8 inch x 3/8 inch x 3/8 inch). In some embodiments the vegetables increase in weight by about 1% to about 12% as a result of absorption of acid media during acidification. In some examples, the vegetable pieces may increase in weight by about 5% to 6%, or by about 5.6%.

In some embodiments, acidifying the vegetable pieces comprises exposing the vegetable pieces to a citric acid media. In some embodiments, the acid media may have pH of between 2.0 and 3.0, or more specifically may have a pH of about 2.1 to 2.2. In some embodiments, the acid media may comprise about 2% citric acid and about 3% sugar in distilled water for a time period of between 1 and 20 minutes.

In some embodiments, acidifying the vegetable pieces comprises exposing potato pieces to acid media having a pH of between 2.0 and 3.0 comprising about 2% citric acid and about 3% sugar in distilled water media for a time period of about 8 minutes, and exposing other vegetable pieces to acid media having a pH of between 2.0 and 3.0 comprising about 2% citric acid and about 3% sugar in distilled water for a time period of about 4.5 minutes. Acidifying the vegetable pieces may comprise reducing the pH of the vegetable pieces to less than 5, and in some of these embodiments, less than 4. In some embodiments, acidification reduces the pH of the vegetable pieces to about 3.6 to 3.8, or more specifically to about 3.68.

In some embodiments, freezing the vegetable pieces comprises reducing the temperature of the vegetable pieces to about -17.8°C (0°F).

In some embodiments, where the vegetable pieces include potato pieces, care may be taken to avoid exposure of the potato pieces to ambient air for more than 5 to 10 minutes prior to blanching, to avoid browning of the potato pieces.

In some embodiments, the process may comprise the following sequence of steps:
providing raw, washed, diced potato pieces having dimensions of about 0.64 cm x 0.95 cm x 0.95 cm (1/4 inch x 3/8 inch x 3/8 inch), and other raw, washed, diced vegetable pieces having dimensions of about 0.95 cm x 0.95 cm x 0.95 cm (3/8 inch x 3/8 inch x 3/8 inch), comprising:
steam blanching the raw, washed diced potato pieces by exposing them to steam at a temperature of 93.3 to 100 °C (200 to 212°F) for 4 to 6 minutes, the steam blanching of the raw potato pieces being effective to inhibit enzyme action detrimental to organoleptic properties, and the steam blanching also having an antimicrobial effect;
steam blanching other raw, washed diced vegetable pieces by exposing them to steam at a temperature of about 98.9 °C (210°F) for a period of 40 to 50 seconds, with the steam blanching of the other vegetable pieces being effective to inhibit enzyme action detrimental to organoleptic properties, and also having an antimicrobial effect;
thereafter acidifying the blanched potato pieces with citric acid media to reduce the pH of the blanched potato pieces to less than about 5; and acidifying the other blanched vegetable pieces with citric acid media to reduce the pH of the other vegetable pieces to less than about 5;
reducing the temperature of the blanched, acidified vegetable pieces to about -17.8°C (0°F) using an IQF process to preserve them for later use;
thereafter hermetically sealing the blanched, acidified, frozen vegetable pieces in flexible pouches under vacuum with a nitrogen atmosphere;
thereafter thawing the blanched, acidified vegetable pieces in the pouches; and
thereafter pressurizing the thawed vegetable pieces to about 5.96 x10⁸ Pa (86,500 psi) for about 3 minutes at a temperature of about 5°C (41 °F) in an HPP process.

Also described herein is a packaged food product comprising packaged vegetables pieces, wherein the product has a refrigerated shelf life of at least 75 days, and wherein the vegetable pieces have been prepared by:
steam blanching raw, washed potato pieces by exposing the raw potato pieces to steam, the steam blanching of the raw potato pieces being effective to inhibit enzyme action detrimental to organoleptic properties, and the steam blanching having an antimicrobial effect;
steam blanching other raw, washed vegetable pieces by exposing them to steam, the steam blanching of the other vegetable pieces being effective to inhibit enzyme action detrimental to organoleptic properties, the steam blanching also having an antimicrobial effect;
thereafter acidifying the blanched potato pieces with citric acid media to reduce the pH of the blanched potato pieces to less than about 5; and acidifying the other blanched vegetable pieces with citric acid media to reduce the pH of the other vegetable pieces to less than about 5;
reducing the temperature of the blanched, acidified vegetable pieces to about -17.8°C (0°F) using an IQF process to preserve them for later use;
thereafter hermetically sealing the blanched, acidified, frozen vegetable pieces in flexible pouches under vacuum with a nitrogen atmosphere;
thereafter thawing the blanched, acidified vegetable pieces in the pouches; and
thereafter pressurizing the thawed vegetable pieces to about 5.96 x10⁸ Pa (86,500 psi) for about 3 minutes at a temperature of about 5°C (41 °F) in an HPP process.

The other vegetable pieces may comprise, for example, one or more of green bell peppers, onions, and red bell peppers. The packaged food product may further comprise a cup containing the packaged vegetable pieces, and additional, separately packaged food items. The additional, separately packaged food items may include, e.g., one or more of meat, cheese and mushrooms. The meat may comprise one or more of ham, bacon, Canadian bacon, sausage, and/or other meats. The cheese may comprise one or more of extra sharp cheddar, sharp cheddar, mild cheddar, American cheese, Swiss cheese, and/or other varieties of cheese.

The above-mentioned cup may be of sufficient size to accommodate the liquid components of an egg in addition to the vegetable pieces and the other separately packaged food items mentioned above, with sufficient extra room to accommodate expansion of the egg and other food items during microwave cooking, and wherein the packaged food product further comprises a removable lid or membrane on the cup, a shrink label on the cup, and instructions for making an egg-based entrée by adding the liquid components of an egg to the cup, combining the vegetable components and additional, separately packaged food items with the egg in the cup, and heating the combination in a microwave oven. The lid may have microperforations therein to accommodate pressure changes.

In embodiments, the packaged food product includes a microwavable rigid cup having a rim defining a generally circular opening to an interior of the cup, a base, and a sidewall extending between the rim and the base. A first flexible pouch is disposed within the interior of the cup. The first flexible pouch can contain cheese pieces. A second flexible pouch is disposed within the interior of the cup. The second flexible pouch contains one or more acidified vegetables having a pH of between 3.5 and 5.0. A flexible membrane sealed to the rim of the cup, with the first and second pouches disposed within the cup, to block the opening prior to at least partial removal of the membrane.

In some embodiments, of the packaged food product, a diameter of the base of the cup is less than the diameter of the opening. For example, the diameter of the base of the cup can be between about 55% and 75% less than the diameter of the opening.

In some embodiments, the diameter of the opening can be between about 120% and 140% of a height of the cup. This range can facilitate microwave heating, as will be discussed further below.

In some embodiments, the packaged food product can further include a third flexible pouch containing a plurality of pieces of one or more meat products.

In some embodiments, two or more of the pouches are optionally joined together.

In embodiments, the method of making a microwaved food product using the packaged food product includes at least partially removing the membrane to provide access to the interior of the cup; removing the first and second pouches from the interior of the cup via the opening; adding egg (which can optionally be supplied by the consumer) to the interior of the cup via the opening; opening the first and second pouches (and, if present, the third pouch); adding contents of the pouches to the interior of the cup via the opening; and microwaving the cup containing the egg and the contents of the pouches. The egg can either be added before or after the addition of the contents of the pouches, or after the addition of only some or one of the pouches and before the addition of others or another of the pouches.

In some embodiments, the step of microwaving the cup containing the egg and the contents of the pouches further comprises the steps of microwaving for a first time period, followed by stirring the egg and the contents of the pouches, followed by microwaving for a second time period. The first time period can be between 30 and 50 seconds, and can be about 40 seconds. The second time period can be between 30 and 50 seconds, and can be between about 40 and 45 seconds. The second time period can be less than the first time period. The first time period and the second time period can be cumulatively less than 90 seconds.

In embodiments, a method of assembling the packaged food product includes depositing the first pouch through the opening and into the interior of the cup; depositing the second pouch through the opening and into the interior of the cup; and closing the opening of the cup using the membrane. The method of assembling can optionally include elevating one of the pouches using another or others of the pouches. Preferably, though not necessarily, the pouch containing the vegetables is disposed closest to the opening of the cup.

### Brief Description of the Drawings

Figure 1 is a side elevation view of a packaged food product showing a cup and a membrane closing an opening of the cup;
Figure 2 is a cross-section of the packaged food product of Figure 1 taking along a centerline thereof, showing three pouches disposed in an interior of the cup, with each of the pouches containing a different food product (shown schematically for illustrative purposes);
Figure 3 is a top plan view of the packaged food product of Figure 1, rotated 90 degrees clockwise and showing the membrane along with a tab portion thereof;
Figure 4 is a cross-section view of only the cup and membrane of the packaged food product of Figure 1, with the three pouches omitted for illustrative purposes;
Figure 5 is a top plan view of a first of the pouches;
Figure 6 is a top plan view of the second and third pouches, showing the pouches joined by an optional saddle;
Figure 7 is a diagram of assembly steps for the packaged food product of Figure 1;
Figure 8 is a diagram of preparation steps for the packaged food product of Figure 1;
Figures 9 and 10 are flow charts illustrating steps of a process described herein;
Figures 11-13 illustrate an embodiment of a vegetable pouch as described herein.

### Detailed Description

Described herein are a packaged food product and methods of making and using it. In some embodiments, the packaged food product comprises a cup containing multiple ingredients in sealed pouches suitable for use in making an omelet or other egg-based entrées, with the cup being suitable for microwave cooking of an egg-based entrée. The pouches may be transparent, and may be flexible, thermoformed pouches. In some embodiments, the ingredients include vegetable pieces such as diced vegetables that offer organoleptic properties similar to those of fresh vegetable pieces after an extended period of time. In some embodiments, after being prepared and processed as described herein, the vegetables may be maintained in refrigerated conditions, e.g., at temperatures of about 5°C (40°F) or 7.2°C (45°F), for a period of time required for processing, shipment, storage, etc., which may be, e.g., 75 to 90 days, without unacceptable degradation of taste, texture, mouth feel, flavor, aroma, color, nutritional content or other important qualities. In some embodiments, in addition to the vegetable pieces mentioned above, the ingredients may also include components such as, for example, one or more meats, e.g., ham, sausage, bacon, Canadian bacon or the like; one or more cheeses; and/or mushrooms. The packaged food product may be provided with or without a liquid egg component.

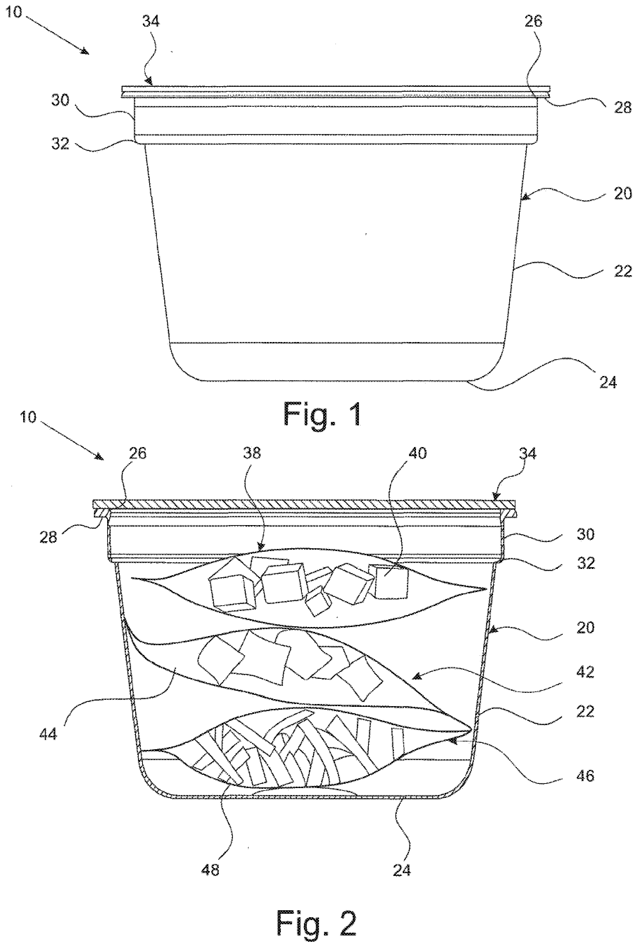

A packaged food product 10 is described herein and illustrated in Figures 1-6. The packaged food product 10 includes a microwavable rigid cup 20, a plurality of pouches 38, 42, 46 each containing one or more food products 40, 44, 48 disposed within the cup 20, and a membrane 34 closing the cup 20 with the pouches 38, 42, 46 therein. The packaged food product 10 is configured to be used with addition of one or more eggs to prepare a food item using microwave heating. Broadly, the packaged food product 10 can be opened, the pouches 38, 42, 46 removed from the cup 20, contents of the pouches 40, 44, 48 and one or more eggs added to the cup 20 to form a mixture, and then the mixture heated to prepare the food item. Optionally, the food item can be consumed directly from the cup 20.

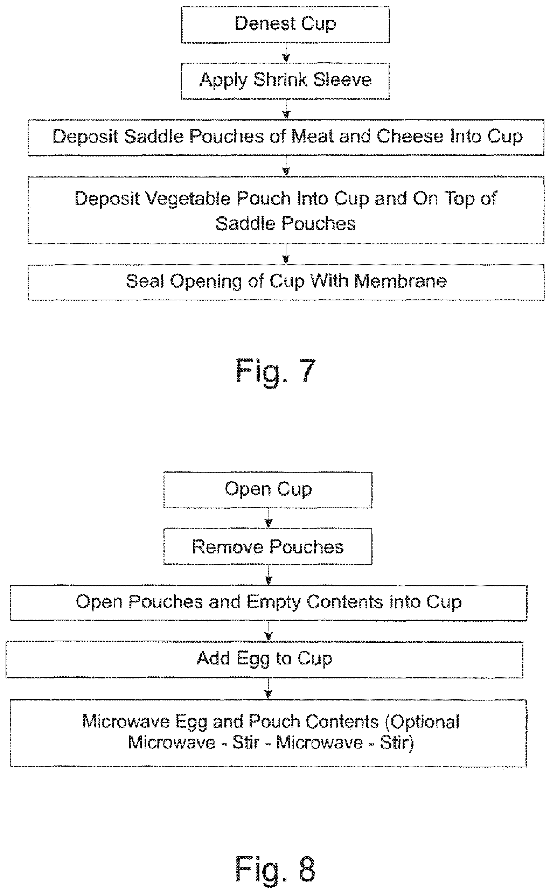

In some embodiments, the packaged food product may include instructions for the consumer to perform some or all of the following steps and/or the steps identified in Figure 8, either in the order set forth below or in a different order:
1. Remove or otherwise open a lid to access the interior of the cup
2. Remove the pouches from the cup
3. Add an egg to the cup, e.g., by cracking a fresh egg (not included), or by using an included packet of liquid egg product, and adding the liquid egg component to the cup
4. Mix or stir the egg in the cup, before, during or after step 5
5. Open the pouches and add some or all of the pouch contents to the cup
6. Heat or cook the contents of the cup, e.g., by placing the cup in a microwave oven
7. Add a component such as shredded cheese, from one of the pouches or from another source, during or after microwave heating.

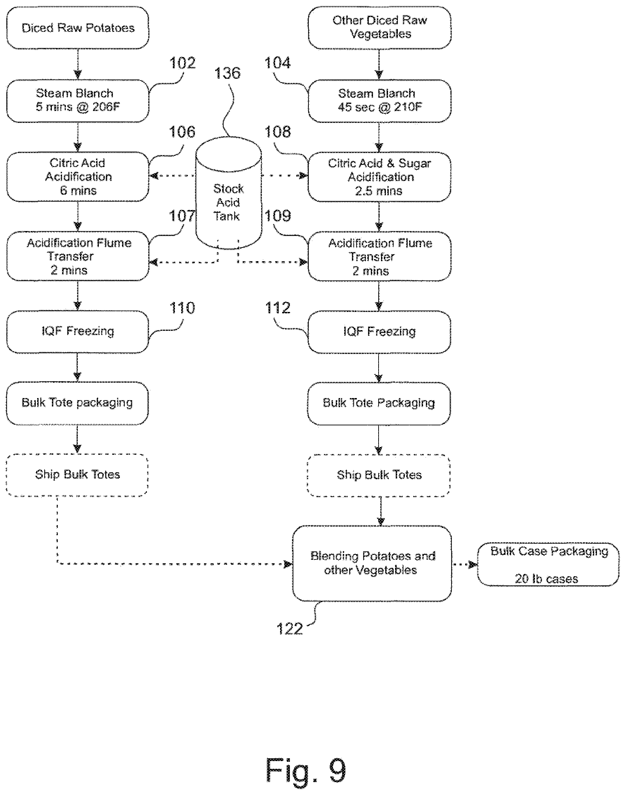

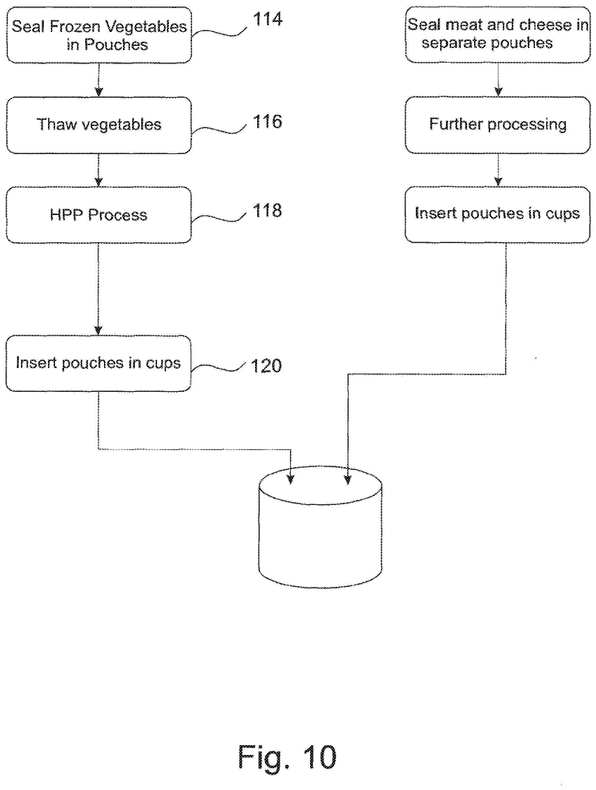

In some embodiments, vegetable components are prepared by the following process, as illustrated in Figures 9 and 10:
blanching 102, 104 the vegetable pieces for a predetermined period of time at a temperature effective to inhibit enzyme action detrimental to organoleptic properties, and to have an antimicrobial effect; acidifying 106, 107, 108, 109 the vegetable pieces in acid media for a period of time sufficient to have a further antimicrobial effect without unacceptably affecting organoleptic properties; freezing 110, 112 the vegetable pieces to a temperature of below -15°C (5 °F). using an IQF technique; sealing 114 the frozen vegetable pieces in containers; storing the vegetable pieces; thawing 116 the vegetable pieces; and subjecting the vegetables to an HPP process 118.

In some embodiments, the process enables freshness of the vegetable pieces to be maintained in the sealed containers at refrigerated temperatures for 75 to 90 days.

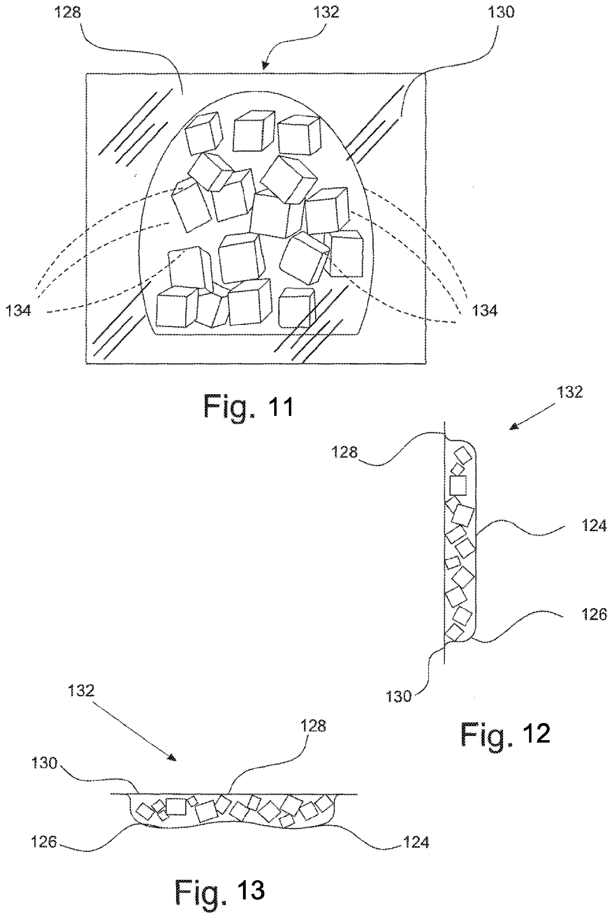

Figures 11-13 illustrate a hermetically sealed pouch containing vegetable pieces 134 after they have been processed as described above. The illustrated pouch 132 comprises a thermoformed back wall 124 having a cavity 126 for the vegetable pieces, a front wall 128 that may be generally flat, and a peripheral seal area 130 at which the front and back walls are sealed to one another.

The process for preparation of the vegetable components is preferably a commercial process suitable for mass production of nutritious, high quality food products. In some embodiments, the vegetable pieces are acidified during or shortly after blanching. In some embodiments, the blanching and acidification may be carried out at rates of more than 2, 268 kg per hour (5,000 lbs. per hour), or more specifically, more than 4,536 kg per hour (10,000 lbs. per hour). In some embodiments, the rate of blanching and acidifying potatoes may be about 6,804 kg per hour (15,000 lbs. per hour) and the rate of blanching other vegetables such as peppers and onions may be about 5,443 kg per hour (12,000 lbs. per hour).

In some embodiments, the vegetable pieces comprise diced vegetable pieces that are approximately cubic in shape, with sides of greater than about 0.32 cm (1/8 inch) and less than 2.22 cm (7/8 inch) in length. In some embodiments, the vegetable pieces comprise diced potato pieces having dimensions of about 0.64 cm x 0.95 cm x 0.95 cm (1/4 inch x 3/8 inch x 3/8 inch), and other vegetable pieces having dimensions of about 0.95 cm x 0.95 cm x 0.95 cm (3/8 inch x 3/8 inch x 3/8 inch). In some embodiments the vegetables increase in weight by about 1% to about 12% as a result of absorption of acid media during acidification. In some examples, the vegetable pieces may increase in weight by 5% to 6%, or by about 5.6%.

In some embodiments, acidifying the vegetable pieces comprises exposing the vegetable pieces to a citric acid media. In some embodiments, the acid media may have pH of between 2.0 and 3.0, or more specifically may have a pH of about 2.1 to 2.2. In some embodiments, the acid media may comprise about 2% citric acid and about 3% sugar in distilled water for a time period of between 1 and 20 minutes.

In some embodiments, acidifying the vegetable pieces comprises exposing potato pieces to acid media having a pH of between 2.0 and 3.0 comprising about 2% citric acid and about 3% sugar in distilled water media for a time period of about 8 minutes, and exposing other vegetable pieces to acid media having a pH of between 2.0 and 3.0 comprising about 2% citric acid and about 3% sugar in distilled water for a time period of about 4.5 minutes. Acidifying the vegetable pieces may comprise reducing the pH of the vegetable pieces to less than 5, and in some of these embodiments, less than 4. In some embodiments, acidification reduces the pH of the vegetable pieces to about 3.6 to 3.8, or more specifically to about 3.68.

In some embodiments, freezing the vegetable pieces comprises reducing the temperature of the vegetable pieces to about -17.8°C (0°F).

In some embodiments, where the vegetable pieces include potato pieces, care may be taken to avoid exposure of the potato pieces to ambient air for more than 10 minutes prior to blanching, to avoid browning of the potato pieces.

In some embodiments, the process may comprise the following sequence of steps:
providing raw, washed, diced potato pieces having dimensions of about 0.64 cm x 0.95 cm x 0.95 cm (¼ inch x 3/8 inch x 3/8 inch), and other raw, washed, diced vegetable pieces having dimensions of about 0.95 cm x 0.95 cm x 0.95 cm (3/8 inch x 3/8 inch x 3/8 inch), comprising:
steam blanching the raw, washed diced potato pieces by exposing them to steam at a temperature of 93.3 to 100 °C (200 to 212°F) for 4 to 6 minutes, the steam blanching of the raw potato pieces being effective to inhibit enzyme action detrimental to organoleptic properties, and the steam blanching also having an antimicrobial effect;
steam blanching other raw, washed diced vegetable pieces by exposing them to steam at a temperature of about 98.9°C (210°F) for a period of 40 to 50 seconds, with the steam blanching of the other vegetable pieces being effective to inhibit enzyme action detrimental to organoleptic properties, and also having an antimicrobial effect;
thereafter acidifying the blanched potato pieces with citric acid media to reduce the pH of the blanched potato pieces to less than about 5; and acidifying the other blanched vegetable pieces with citric acid media to reduce the pH of the other vegetable pieces to less than about 5;
reducing the temperature of the blanched, acidified vegetable pieces to about -17.8 °C (0°F) using an IQF process to preserve them for later use;
thereafter hermetically sealing the blanched, acidified, frozen vegetable pieces in flexible pouches under vacuum with a nitrogen atmosphere;
thereafter thawing the blanched, acidified vegetable pieces in the pouches; and
thereafter pressurizing the thawed vegetable pieces to about 5.96 x10⁸ Pa (86,500 psi) for about 3 minutes at a temperature of about 5°C (41 °F) in an HPP process.

Also described herein is a packaged food product comprising packaged vegetables pieces, wherein the product has a refrigerated shelf life of at least 75 days, and wherein the vegetable pieces have been prepared by:
steam blanching raw, washed potato pieces by exposing the raw potato pieces to steam, the steam blanching of the raw potato pieces being effective to inhibit enzyme action detrimental to organoleptic properties, and the steam blanching having an antimicrobial effect;
steam blanching other raw, washed vegetable pieces by exposing them to steam, the steam blanching of the other vegetable pieces being effective to inhibit enzyme action detrimental to organoleptic properties, the steam blanching also having an antimicrobial effect;
thereafter acidifying the blanched potato pieces with citric acid media to reduce the pH of the blanched potato pieces to less than about 5; and acidifying the other blanched vegetable pieces with citric acid media to reduce the pH of the other vegetable pieces to less than about 5;
reducing the temperature of the blanched, acidified vegetable pieces to about -17.8°C (0°F) using an IQF process to preserve them for later use;
thereafter hermetically sealing the blanched, acidified, frozen vegetable pieces in flexible pouches under vacuum with a nitrogen atmosphere;
thereafter thawing the blanched, acidified vegetable pieces in the pouches; and
thereafter pressurizing the thawed vegetable pieces to about 5.96 x10⁸ Pa (86,500 psi) for about 3 minutes at a temperature of about 5°C (41°F) in an HPP process.

The other vegetable pieces may comprise, for example, one or more of green bell peppers, red bell peppers, onions, mushrooms, tomatoes, cilantro, garlic, and green onions. The packaged food product may further comprise a cup containing the packaged vegetable pieces, and additional, separately packaged food items. The additional, separately packaged food items may include, e.g., one or more of meat and/or cheese. The meat may comprise one or more of ham (such as Applewood smoked ham or other flavored ham), bacon, Canadian bacon, sausage (such as pork, turkey or chorizo sausage), and/or other meats. Depending upon the type of meat, the meat may be shredded, crumbled, diced or otherwise reduced to suitable size pieces. The cheese may comprise one or more of extra sharp cheddar, sharp cheddar, mild cheddar, American cheese, Swiss cheese, mozzarella, pepper jack, and/or other varieties of cheese.

The food products, along with various seasonings, can be provided in the following non-limiting, exemplary combinations, numbered 1-5:

| | Cheese | Meat | Vegetable(s) |
|---|---|---|---|
| | Sharp Cheddar | Bacon Bits | Diced Potato |
| | Mild Cheddar | Diced Ham | Green Bell Pepper & Onion, Diced Potato |
| | Mozzarella | Turkey Sausage | Red Bell Pepper, Mushroom & Onion, Diced Potato |
| | Mild Cheddar | Pork Sausage | Red/Green Bell Pepper & Onion, Diced Potato |
| | Pepper Jack | Chorizo Sausage | Red/Green Bell Pepper & Onion, Tomatoes, Jalapenos, Green Onions, Cilantro, Garlic, Diced Potato |

The above-mentioned cup may be of sufficient size to accommodate the liquid components of an egg in addition to the vegetable pieces and the other separately packaged food items mentioned above, with sufficient extra room to accommodate expansion of the egg and other food items during microwave cooking without overflowing, and wherein the packaged food product further comprises a removable lid on the cup, a shrink label on the cup, and instructions for making an egg-based entrée by adding the liquid components of an egg to the cup, combining the vegetable components and additional, separately packaged food items with the egg in the cup, and heating the combination in a microwave oven. The lid may have microperforations therein to accommodate pressure changes.

### Blanching:

In some embodiments, the blanching process described above is a steam blanch in which the vegetable pieces are exposed to steam while on a continuous conveyor. In other embodiments, the blanching process may comprise immersion of the vegetable pieces in boiling water, a chemical blanch, or another blanch process.

In some embodiments, the blanch process for potato pieces may comprise steam blanching the raw, washed, diced potato pieces by exposing them to steam at a temperature of 93.3 to 100°C (200 to 212°F) for 4 to 6 minutes, or about 5 minutes. This steam blanching of the raw potato pieces is believed to be effective to inhibit enzyme action detrimental to organoleptic properties, and this steam blanching is also believed to have an antimicrobial effect sufficient that, in combination with other steps described herein, no further heating of the potato pieces is required for antimicrobial purposes.

In some embodiments, the blanch process for vegetable pieces other than potato pieces, including, e.g., bell pepper and onion pieces, comprises steam blanching the raw, washed, diced vegetable pieces by exposing them to steam at a temperature of about 98.9°C (210°F) for a period of 40 to 50 seconds, or about 45 seconds, with the steam blanching being effective to inhibit enzyme action detrimental to organoleptic properties, and also having an antimicrobial effect. This steam blanching of the subject vegetable pieces is also believed to have an antimicrobial effect sufficient that, in combination with other steps described herein, no further heating of the vegetable pieces is required for antimicrobial purposes. This helps to provide the vegetable pieces with organoleptic qualities similar to those of fresh vegetables over extended periods of refrigerated storage.

Where the blanch involves heating of the vegetable pieces, they may be cooled by forced convection or another cooling process after being heated. Forced convection may include, e.g., passing the vegetable pieces through ambient airflow or other forms of forced convection for periods of, e.g., 5 seconds to about 5 minutes, 5 seconds to 30 seconds, or about 15 seconds.

### Acidification:

In some embodiments, acidification occurs after blanching. It is believed that blanching may facilitate subsequent acidification by opening the cell structure of vegetable pieces and/or otherwise increasing the rate at which acid media may be absorbed by the vegetable pieces. In some embodiments, acidification may take place immediately after blanching, e.g., within 5 to 10 minutes of blanching, as part of an integrated, in-line process.

The acidification process may comprise exposing the vegetable pieces to an acid media. In some embodiments, the vegetable pieces may be sprayed, washed, immersed in, and/or otherwise exposed to a liquid acid media in continuous or batch processes. In some embodiments, the process may involve spraying or washing the vegetable pieces with acid media in addition to immersing them in the acid media. The acidification process may involve exposure of all or substantially all of the vegetable pieces' surfaces to the acid media for sufficient time to enable the acid media to permeate or substantially permeate each vegetable piece. In some embodiments, the acidification process may be carried out at or near ambient temperatures of, e.g., 21.1 to 26.7 °C (70 to 80°F). In other embodiments, the acidification process may take place at elevated temperatures or below-ambient temperatures. In particular, the vegetable pieces may begin the acidification process at elevated temperatures as a result of the acidification process following closely after blanching, with the acid media beginning the process at ambient temperatures of 21.1 to 26.7 °C (70 to 80°F). Alternatively, the vegetable pieces may be cooled to below ambient temperatures after blanching and prior to acidification, and/or the acid media may be cooled to below ambient temperatures for the acidification process.

In one example, the acidification process comprises immersion of vegetable pieces in acid media comprising 1% to 20% citric acid, ascorbic acid, or pHase^{™} food grade sodium acid sulfate in water, a product marketed by Jones-Hamilton Co. More specifically, the acid media may comprise, for example, 0.1% to 5%, 0.5 % to 2.5%, 0.5% to 1.5%, about 1%, about 2%, or about 3% or about 2% citric acid, ascorbic acid, or pHase^{™} food grade sodium acid sulfate in water. In some embodiments, the acid media may include sugar in amounts of, e.g., 0.1% to 20%, 1% to 10%, 2% to 5%, 2.5% to 3.5%, or 3%. The water may be distilled water. All percentages herein refer to weight percentages.

In some embodiments, the pH of the acid media may be, for example, between 1 and 6.5. In some examples, the acid media may comprise an ascorbic acid media with a pH of between 2.5 and 3. In some examples, the acid media may comprise a citric acid media with a pH of between 2 and 2.5, or a pHase acid media having a pH of between 1.1 and 1.6. In some examples, the acid media may comprise combinations of the acids and other components mentioned above, and/or may comprise other acids and other ingredients not mentioned above, e.g., vinegar, acetic acid, malic acid, tartaric acid, lactic acid, benzoic acid, or sorbic acid.

Citric acid is believed to have certain advantages. As shown, e.g., in Tables 1 to 5 provided below, on a per pound basis, citric acid is believed to be more effective in reducing pH than ascorbic acid. Also, the taste of vegetables acidified with citric acid media is believed to be preferable to consumers as compared with the taste of vegetables treated with certain other media. In particular, it is believed that use of some acid media may result in vegetables having an undesirable aftertaste. An additional advantage of citric acid is that it may help to whiten potato pieces, or at least prevent or inhibit graying of potato pieces over time.

In some embodiments, the pH of the vegetable pieces before acidification may be, e.g., about 5 to about 8, about 5 to about 7, about 5 to about 6, or 5.2 to 5.3. Acidification may adversely affect taste and/or other organoleptic properties. Although this has not been found to be problematic with potato pieces, it has been found that inclusion of a sweetener in acid media may help to avoid other vegetable pieces such as pepper and onion pieces, as well as mushroom pieces, acquiring an overly tangy taste. In some embodiments, concentrations of a sugar such as dextrose in a concentration of e.g., 1% to 5%, 2% to 4%, or about 3% may be suitable for this purpose. Other natural and artificial sweeteners that might be used, alone or in combination with other sweeteners, to provide an effect similar or equivalent to that provided by including 3% dextrose in the acid media, may include for example sucrose, fructose, corn syrup, high fructose corn syrup, acesulfame K, and sucralose.

Also, reduction of acid concentration in the acid media can help to avoid the vegetable pieces acquiring an overly tangy taste, so long as the desired pH can be achieved with a lower acid concentration. In some embodiments, one or more of the acid media formulas provided in Tables 1 to 18 set out below may be used. In some embodiments, the blanched, acidified potato pieces include, in addition to the potato pieces themselves, citric acid and water, but are substantially free of other ingredients. In some embodiments, other vegetable pieces include, in addition to the vegetable pieces, citric acid, sugar and water, but are substantially free of other ingredients, meaning that any other ingredients are in amounts small enough that they need not be listed as ingredients under labeling requirements in the United States. In some embodiments, the pH of the vegetable pieces after acidification may be, e.g., about 2 to about 5.0, 2.5 to 5.0, 2.5 to 4.8, 3.0 to 5.0, 3.5 to 5.0, 4.0 to 5.0, 4.0 to 4.8, 4.4 to 4.6, or about 4.5. Values of the pH of vegetable pieces herein may be determined by pureeing a representative sample of a blend of the pieces.

As noted above, Tables 1 to 6 provided below illustrate effects of acidification on pH and weight of 100g batches of vegetable pieces immersed in 100g quantities of citric acid media and ascorbic acid media. Tables 7 to 13 provided below illustrate effects of acidification on pH and weight of 1015g batches of vegetable pieces immersed in 1600g quantities of citric acid media and ascorbic acid media. Tables 14 to 18 illustrate effects of acidification on pH and weight of batches of vegetable pieces immersed in 1000g quantities of citric acid media of varying concentrations.

In some embodiments, acidifying the potato pieces and other vegetable pieces comprises, in each case, immersing the vegetable pieces in acid media in a two-step continuous process wherein the vegetable pieces are subjected to a first acidification step 106, 108 in which they are carried through an acidification vessel by a conveyor, then subjected to a second acidification step 107, 109 in which they are carried through an acidification flume or pipe to a delivery location while immersed in acid media. The dwell time in the vessel may be, e.g., about 5 to 7 minutes for potato pieces, or about 6 minutes as indicated in Figure 9; and to 4 minutes, or about 2.5 minutes, as indicated in Figure 9, for other vegetable pieces. For both potatoes and other vegetables, the acidification flume transfer steps 107 and 109 may take, e.g., 1 to 3 minutes, or about 2 minutes as indicated in Figure 9. Economies may be realized by using a common source of acid or acid media such as a stock acid tank, shown at 136 in Figure 9, to supply acid media to the separate parallel acidification operations for the potato pieces and the other vegetable pieces. Where different acid media are to be used for potato pieces and other vegetable pieces that are being acidified simultaneously, separate sources of acid media may be employed, or alternatively a common source of an acid solution may be employed, with one or more additives being supplied separately to customize parallel simultaneous acidification processes. For example, a common source of a 1% citric acid solution may be used for both potato and other vegetable processes, with dextrose being added to the other vegetable process.

The flume or pipe empties the vegetable pieces onto a conventional conveyor shaker, which may remove excess acid media prior to IQF freezing. Excess acid media may be returned to a stock acid tank, acidification flume, or other location for re-use, or otherwise recycled for later use.

### Freezing:

The IQF freezing process herein enables vegetable pieces, mushroom pieces, and/or other food components to be stored for later use. This provides flexibility with regard to throughput rates and time frames for processes downstream of the IQF process, e.g., bulk tote packaging, shipping of bulk totes, blending 122 of potato pieces and other vegetable pieces, etc.

### Cup:

The cup 20 is preferably circular and has a bottom or base 24, an upper rim 28 surrounding an opening 26 and including an outwardly extending flange, and a sidewall 22 extending between the rim 28 and the base 24. The diameter of the base 24 is less than the diameter of the opening 26 such that the sidewall 22 is inwardly tapered toward the base 24 during at least part of the span between the opening 26 and the base 24. In one embodiment, illustrated in Figures 1-4, the diameter of the base 24 of the cup 20 is between about 55% and 75% less than the diameter of the opening 26, and the diameter of the opening 26 is between about 120% and 140% of the height of the cup 20. If the diameter of the opening 26 is below about 120% of the height of the cup 20, then the middle portion of the mixture in some embodiments can take longer to heat a sufficient amount as compared to if the diameter of the opening 26 is about 120% of the height of the cup 20. Of course, the greater amount that the diameter of the opening 26 is below about 120% of the height of the cup 20, the more time will be required to heat the middle portion of the mixture a sufficient amount. Also in the preferred embodiment shown in Figures 1-4, the opening 26 of the cup 20 has a diameter of about 9.4 cm (3.7 inches) and the height of the cup 20 is about 7.1 cm (2.8 inches). These dimensions contribute to a cup 20 that is sized to contain the mixture without spilling during microwave heating, including when either one egg is used or two eggs are used. The cup 20 is made from a material that is suitable for microwave heating, such as polypropylene, and can be made using a thermoforming process.

Immediately below the rim 28 is an upper section 30 of the sidewall 22 that is slightly outwardly tapered toward the base 24. The upper section 30 of the sidewall 22 extends between the rim 28 and an inwardly extending step 32, where the sidewall 22 transitions to a lower section that tapers inwardly toward the base 24. The step 32 and upper section 30 of one cup 20 cooperate with like parts of another cup 20 when the cups are nested together to assist with denesting during assembly of the packaged food product.

### Membrane:

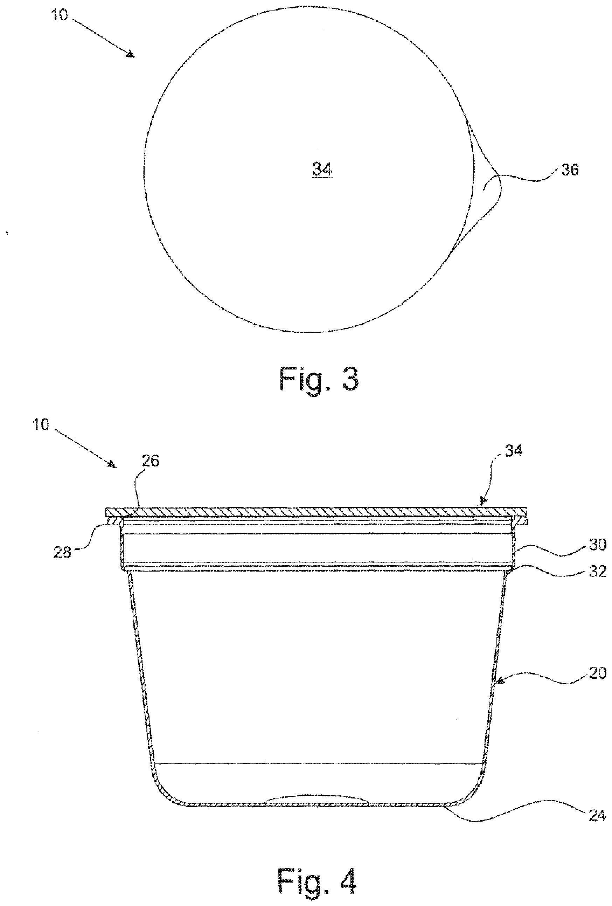

The flexible lid or membrane 34 can be a multilayer film, which can optionally include layers of polyethylene, ethylene vinyl acetate, and polypropylene. The flexible membrane 34 can be heat sealable to the flange of the rim 28 of the cup 20, optionally in a hermetic manner. As mentioned above, the membrane 34 may have microperforations therein to accommodate pressure changes within the sealed cup, such as may arise during transportation. The membrane 34 can optionally have a tab portion 36, shown in Figure 3, that can be grasped by a consumer to initiate removal of the membrane 34 from the cup 20.

### Pouches:

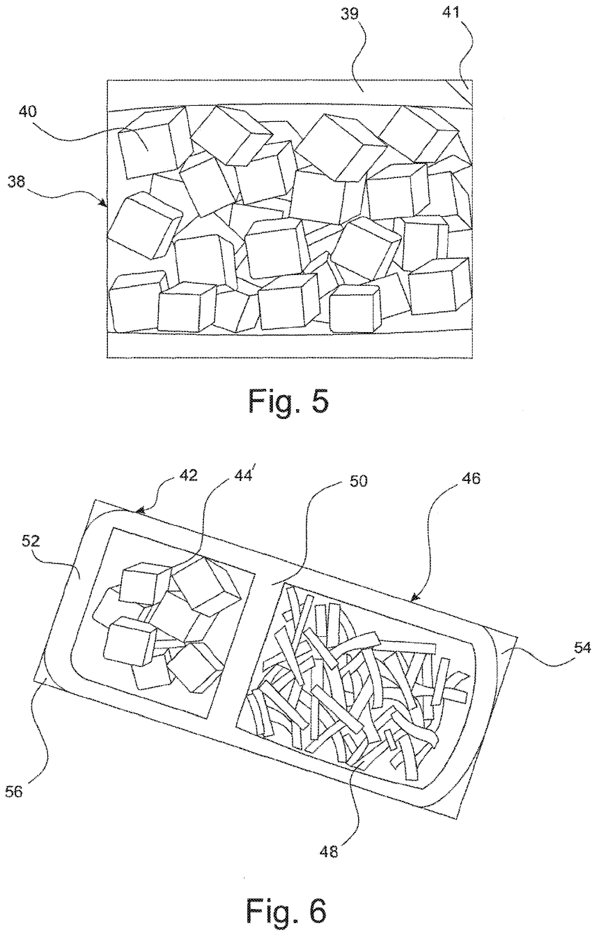

The flexible pouches 38, 42, 46 are optionally formed of transparent film, and have a sealed periphery surrounding an interior containing the food products 40, 44, 48. The pouches 38, 42, 46 can optionally include a thermoformed pocket formed in a bottom sheet of film that is then filled and covered with a second sheet of film. The two films are then joined together, such as with a heat seal, about the thermoformed pocket. An unsealed region between the two films outwardly of the sealed periphery can provide an easy open feature to initiate pulling the two films apart to open the pouch. Instead of a thermoformed pocket, two films can be joined together about a food product 40 (or a single film folded over and sealed) to form the pouch 38, as shown in Figure 5, with top and bottom seals 39 along with an unsealed starter portion 41.

With reference to Figures 11-13, a pouch 132 can contain pieces of a food product 134 disposed within a thermoformed pocket 124 of a bottom film 126. A seal 130 can be formed between a portion of the bottom film 126 disposed outwardly from the pocket 124 and a top film 128. An unsealed area between top film 128 and the bottom film 126 and outwardly of the seal 130 can be used to facilitate separation of the films 126, 128 to open the pouch 132.

Two of the pouches 42, 46 can be joined together using a saddle 50 to form a saddle pack, as shown in Figure 6. More specifically, the bottom sheet of film can have two thermoformed pockets spaced apart, and the second sheet of film can be sealed around each of the pockets in a sealing margin 52 such that the contents of the two pouches 44', 48 are separated but the pouches 42, 46 are joined together. Unsealed areas 54, 56 outward of the sealing margin 52 can be used to facilitate opening of the respective pouches 42, 46. Such a saddle pack can advantageously reduce the number of assembly steps for the packaged food product. Specifically, instead of having to deposit two separate pouches into the interior of the cup, a single saddle pack can be used instead. Of course, other pouches can also be deposited into the interior of the cup 20 in addition to the saddle pack.

In addition to the food components, the pouches may include nitrogen or a mixture of nitrogen and carbon dioxide, e.g., 75% nitrogen, 25% carbon dioxide.

### Packaged Food Product Assembly:

To assemble the packaged food product, such as using the steps shown in Figure 7, the cup is denested from other cups, such as in a stack of cups, the cheese ingredient pouch and the meat ingredient pouch are both deposited into the interior of the cup through the opening. Next, the vegetable ingredient pouch is deposited into the interior of the cup through the opening. While the order of insertion of the pouches can be switched, it is preferred to insert the vegetable ingredient pouch after the cheese and meat ingredient pouches so that the latter can elevate the former from the base of the cup and present the former to the consumer upon opening of the membrane. The membrane is sealed to the flange of the cup, such as by using a heat seal, after the pouches have been deposited into the interior of the cup.

### Tables 1 to 18:

Tables 1 to 6 illustrate effects of acidification on pH and weight of 100g batches of vegetable pieces immersed in 100g quantities of citric acid media and ascorbic acid media. Tables 7-13 illustrate effects of acidification on pH and weight of 1015g batches of vegetable pieces immersed in 1600g quantities of citric acid media and ascorbic acid media. Tables 14-18 illustrate effects of acidification on pH and weight of batches of vegetable pieces immersed in 1000g quantities of citric acid media of varying concentrations.

**Table 1**

| Formula -Ascorbic Acid Media | | |
|---|---|---|
| Ingredient | % | g |
| Ascorbic Acid | 2.00 | 2.00 |
| Sugar | 3.00 | 3.00 |
| Distilled Water | 95,00 | 95.00 |
| | 100.00 | 100.00 |

**Table 2**

| Formula - Citric Add Media | | |
|---|---|---|
| Ingredient | % | g |
| Citric Acid | 2.00 | 2.00 |
| Sugar | 3.00 | 3.00 |
| Distilled Water | 95.00 | 95.00 |
| | 100.00 | 100.00 |

**Table 3**

| Acid Media (pH) | | | | | |
|---|---|---|---|---|---|
| | pH | pH | pH | Ave. pH | |
| Ascorbic Acid Media | 2.67 | 2.67 | 2.68 | 2.67 | Day 1 |
| | 2.65 | | | | Day 2 |
| Citric Acid Media | 2.17 | 2.18 | 2.16 | 2.17 | Day 1 |
| | 2.13 | | | | Day 2 |

**Table 4**

| Fresh Veggie Blend (Red Peppers, Onion) | | | | |
|---|---|---|---|---|
| Blend Puree (pH) | 5.26 | | | |
| | 5.23 | | | |
| | 5.20 | | | |
| Average pH | 5.23 | | | |

**Table 5**

| Veggie Blend Acidification | | | | | | | |
|---|---|---|---|---|---|---|---|
| | Veggie Blend Wt | | Post Acidification pH (Blend Puree) | | | | |
| | Pre-Wt (g) | Post-Wt (g) | pH | pH | pH | Ave.pH | Time (min) |
| Ascorbic Acid (A) | 100.00 | 104.90 | 4.33 | 4.32 | 4.31 | 4.32 | 11.5 |
| Citric Acid (C) | 100.00 | 105.60 | 3.67 | 3.68 | 3.69 | 3.68 | 25.0 |

**Table 6**

| Acid Pick Up | | |
|---|---|---|
| A | 4.90 | % |
| C | 5.60 | % |

**Table 7**

| Formula - Ascorbic Acid Media | | |
|---|---|---|
| Ingredient | % | g |
| Ascorbic Acid | 2.00 | 32.00 |
| Sugar | 3.00 | 48.00 |
| Distilled Water | 95.00 | 1520.00 |
| | 100.00 | 1600.00 |

**Table 8**

| Formula - Citric Acid Media | | |
|---|---|---|
| Ingredient | % | g |
| Citric Add | 2.00 | 32.00 |
| Sugar | 3.00 | 48.00 |
| Distilled Water | 95.00 | 1520.00 |
| | 100.00 | 1600.00 |

**Table 9**

| Formula - pHase Acid Media | | |
|---|---|---|
| Ingredient | % | g |
| pHase Acid | 2.00 | 32.00 |
| Sugar | 3.00 | 48.00 |
| Distilled Water | 95,00 | 1520.00 |
| | 100.00 | 1600.00 |

**Table 10**

| Acid Media (pH) | | | | |
|---|---|---|---|---|
| | pH | pH | pH | Ave. pH |
| Ascorbic Acid Media | 2.76 | 2.76 | 2.76 | 2.76 |
| | | | | |
| Citric Acid Media | 2.23 | 2.23 | 2.23 | 2.23 |
| | | | | |
| Phase Acid Media | 1.37 | 1.35 | 1.33 | 1.35 |

**Table 11**

| Fresh Veggie Blend (Red Pepper, Green Peppers, Onions) | | | | |
|---|---|---|---|---|
| Blend Puree (pH) | 5.00 | | | |
| | 4.99 | | | |
| | 5.00 | | | |
| Average pH | 5.00 | | | |

**Table 12**

| Veggie Blend Acidification (Dwell Time - 25 mins) | | | | | | | |
|---|---|---|---|---|---|---|---|
| | Veggie Blend Wt | | Post Acidification pH (Blend Puree) | | | | |
| | Pre-Wt (g) | Post-Wt (g) | pH pH | | | pH | Ave. pH |
| Ascorbic Acid (A) | 1015.00 | 1064.00 | 4.41 | 4.40 | | 4.40 | 4.40 |
| Citric Acid (C) | 1015.00 | 1055.90 | 3.98 | 3.95 | | 3.96 | 3.96 |
| Phase Acid (P) | 1015.00 | 1048.50 | 2.72 | 2.79 | | 2.78 | 2.76 |

**Table 13**

| Acid Pick Up | |
|---|---|
| A | 4.83 % |
| C | 4.03 % |
| P | 3.30 % |

**Table 14**

| Formula - Citric Acid Media | | | |
|---|---|---|---|
| Ingredient | % | g | |
| Citric Acid | 2.00 | 20.00 | Batch Size 1000 |
| Sugar | 3.00 | 30.00 | |
| Distilled Water | 95,00 | 950.00 | |
| | 100.00 | 1000.00 | |

**Table 15**

| Formula - Citric Acid Media | | |
|---|---|---|
| ingredient | % | g |
| Citric Acid | 1.50 | 15.00 |
| Sugar | 3.00 | 30.00 |
| Distilled Water | 95.50 | 955.00 |
| | 100.00 | 1000.00 |

**Table 16**

| Formula - Citric Acid Media | | |
|---|---|---|
| Ingredient | % | 9 |
| Citric Acid | 1.00 | 10.00 |
| Sugar | 3.00 | 30.00 |
| Distilled Water | 96.00 | 960.00 |
| | 100.00 | 1000.00 |

**Table 17**

| Acid Media (pH) | | | | |
|---|---|---|---|---|
| | pH | pH | pH | Ave. pH |
| Citric Acid Soln (2%) | 1.99 | 1.98 | 1.98 | 1.98 |
| | | | | |
| Citric Acid Soln (1.5%) | 2.07 | 2.07 | 2.07 | 2.07 |
| | | | | |
| Citric Acid Soln (1.0%) | 2.18 | 2.18 | 2.18 | 2.18 |

**Table 18**

| Veggie Blend Acidification (Dwell Time - 2 mins) | | | | | | |
|---|---|---|---|---|---|---|
| | | | Post Acidification pH (Blend puree) | | | |
| | | | pH | pH | pH | Ave. pH |
| Citric Acid (2.0%) | | | 4.05 | 4.06 | 4.06 | 4.06 |
| Citric Acid (1,5%) | | | 4.20 | 4.21 | 4.21 | 4.21 |
| Citric Acid (1.0%) | | | 4.31 | 4.33 | 4.32 | 4.32 |

## Claims

1. A packaged food product (10) comprising a microwavable rigid cup (20) having a rim (28) defining a generally circular opening (26) to an interior of the cup, a base (24), and a sidewall (22) extending between the rim and the base, a first flexible pouch (38) disposed in the interior of the cup, a second flexible pouch (42) disposed in the interior of the cup and containing one or more acidified vegetables having a pH of between 3.5 and 5.0, and a flexible membrane 34 sealed to the rim of the cup to block the opening prior to at least partial removal of the membrane.

2. The packaged food product of claim 1, wherein:
i) the cup optionally contains cheese pieces; and/or
ii) a diameter of the base of the cup is less than the diameter of the opening, optionally
wherein the diameter of the base of the cup is between about 55% and 75% less than the diameter of the opening, and further optionally
wherein the diameter of the opening is between about 120% and 140% of a height of the cup.

3. The packaged food product of any one of claims 1, further comprising a third flexible pouch (46) containing a plurality of pieces of a meat product.

4. The packaged food product of claim 3, wherein the first and third flexible pouches are joined by a saddle (50).

5. A method of making a microwaved food product using the packaged food product of claim 1, the method comprising:
at least partially removing the membrane to provide access to the interior of the cup;
removing the first and second pouches from the interior of the cup via the opening;
adding egg to the interior of the cup via the opening by cracking a fresh egg not provided with the packaged food product;
mixing or stirring the egg in the cup;
opening the first and second pouches;
adding contents of the first and second pouches to the interior of the cup via the opening; and
microwaving the cup containing the egg and the contents of the first and second pouches.

6. The method of claim 5, wherein the step of adding the egg occurs after the step of adding the contents of the first and second pouches.

7. The method of claim 5, wherein the step of microwaving the cup containing the egg and the contents of the first and second pouches further comprises the steps of microwaving for a first time period, followed by stirring the egg and the contents of the first and second pouches, followed by microwaving for a second time period.

8. The method of claim 7, wherein the second time period is less than the first time period.

9. A method of making a microwaved food product using the packaged food product of claim 3, the method comprising:
at least partially removing the membrane to provide access to the interior of the cup;
removing the first, second and third pouches from the interior of the cup via the opening;
adding egg to the interior of the cup via the opening by cracking a fresh egg not provided with the packaged food product;
mixing or stirring the egg in the cup;
opening the first, second and third pouches;
adding contents of the first, second and third pouches to the interior of the cup via the opening; and
microwaving the cup containing the egg and the contents of the first, second and third pouches.

10. The method of claim 9, wherein the step of adding the egg occurs after the step of adding the contents of the first, second and third pouches.

11. The method of claim 10, wherein the step of microwaving the cup containing the egg and the contents of the first, second and third pouches further comprises the steps of microwaving for a first time period, followed by stirring the egg and the contents of the first, second and third pouches, followed by microwaving for a second time period.

12. The method of claim 11, wherein the second time period is less than the first time period.

13. The method of claim 12, wherein the first time period and the second time period are cumulatively less than 90 seconds.

14. A method of assembling the packaged food product of claim 1, the method comprising:
depositing the first pouch through the opening and into the interior of the cup;
depositing the second pouch through the opening and into the interior of the cup; and
closing the opening of the cup using the membrane.

15. The method of claim 14, wherein a third pouch is attached to the first pouch, and wherein the step of depositing the first pouch includes depositing the third pouch, optionally
wherein the first and third pouches elevate the second pouch from the base of the cup, and further optionally
wherein the method further comprises applying a shrink label to the cup.

## Patentansprüche

1. Verpacktes Lebensmittelprodukt (10), umfassend einen mikrowellengeeigneten steifen Becher (20) mit einem eine im Allgemeinen runde Öffnung (26) zu einem Innenraum des Bechers umgrenzenden Rand (28), mit einem Boden (24) sowie einer Seitenwand (22), welche sich zwischen dem Rand und dem Boden erstreckt, einen ersten flexiblen Beutel (38), welcher im Innenraum des Bechers angeordnet ist, einen zweiten flexiblen Beutel (42), welcher im Innenraum des Bechers angeordnet ist und ein oder mehrere gesäuerte Gemüsesorten mit einem pH-Wert zwischen 3,5 und 5,0 enthält, sowie eine flexible Membran (34), welche am Rand des Bechers befestigt ist, um das Öffnen vor einer zumindest teilweisen Entfernung der Membran zu verhindern.

2. Abgepacktes Lebensmittelprodukt nach Anspruch 1, wobei:
i) der Becher optional Käsestücke enthält; und/oder
ii) ein Durchmesser des Bodens des Bechers kleiner ist als der Durchmesser der Öffnung,
wobei optional der Durchmesser des Bodens des Bechers zwischen ungefähr 55% und 75% kleiner ist als der Durchmesser der Öffnung, und
wobei weiter optional der Durchmesser der Öffnung zwischen ungefähr 120% und 140% einer Höhe des Bechers beträgt.

3. Abgepacktes Lebensmittelprodukt nach Anspruch 1, welches des Weiteren einen dritten flexiblen Beutel (46) umfasst, welcher eine Vielzahl von Stücken eines Fleischprodukts enthält.

4. Abgepacktes Lebensmittelprodukt nach Anspruch 3, wobei der erste und dritte flexible Beutel über einen Steg bzw. ein Rückenstück (50) miteinander verbunden sind.

5. Verfahren zur Herstellung eines mikrowellengeeigneten Lebensmittelprodukts unter Verwendung des abgepackten Lebensmittelprodukts nach Anspruch 1, wobei das Verfahren umfasst:
eine zumindest teilweise Entfernung der Membran, um einen Zugang zum Innenraum des Bechers bereitzustellen;
Entfernen bzw. Herausnehmen des ersten und des zweiten Beutels aus dem Innenraum des Bechers über die Öffnung;
Hinzufügen von Ei zum Innenraum des Bechers über die Öffnung, indem ein nicht mit dem abgepackten Lebensmittelprodukt bereitgestelltes Ei aufgeschlagen wird;
Vermischen oder Verrühren des Eis im Becher;
Öffnen des ersten und zweiten Beutels;
Zugabe der Inhalte des ersten und zweiten Beutels in den Innenraum des Bechers über die Öffnung; und
Erhitzen in der Mikrowelle des Bechers, welcher das Ei und die Inhalte des ersten und zweiten Beutels enthält.

6. Verfahren nach Anspruch 5, wobei der Schritt des Hinzufügens des Eis nach dem Schritt der Zugabe der Inhalte des ersten und zweiten Beutels erfolgt.

7. Verfahren nach Anspruch 5, wobei der Schritt der Erhitzung des das Ei und die Inhalte des ersten und zweiten Beutels enthaltenden Bechers in der Mikrowelle des Weiteren die Schritte der Mikrowellenerhitzung für eine erste Zeitdauer umfasst, gefolgt vom Verrühren des Eis und der Inhalte des ersten und zweiten Beutels, gefolgt von der Mikrowellenerhitzung für eine zweite Zeitdauer.

8. Verfahren nach Anspruch 7, wobei die zweite Zeitdauer kürzer ist als die erste Zeitdauer.

9. Verfahren zur Herstellung eines mikrowellengeeigneten Lebensmittelprodukts unter Verwendung des abgepackten Lebensmittelprodukts nach Anspruch 3, wobei das Verfahren umfasst:
ein zumindest teilweises Entfernen der Membran zur Bereitstellung eines Zugangs zu dem Innenraum des Bechers;
Entnahme des ersten, zweiten und dritten Beutels aus dem Innenraum des Beutels über die Öffnung;
Hinzufügen von Ei in den Innenraum des Bechers über die Öffnung, indem ein nicht mit dem abgepackten Lebensmittelprodukt bereitgestelltes Ei aufgeschlagen wird;
Vermischen oder Verrühren des Eis in dem Becher;
Öffnen des ersten, zweiten und dritten Beutels;
Zugabe der Inhalte des ersten, zweiten und dritten Beutels in den Innenraum des Bechers über die Öffnung; und
Erhitzen in der Mikrowelle des Bechers, welcher das Ei und die Inhalte des ersten, zweiten und dritten Beutels enthält.

10. Verfahren nach Anspruch 9, wobei der Schritt der Zugabe des Eis nach dem Schritt der Zugabe der Inhalte des ersten, zweiten und dritten Beutels erfolgt.

11. Verfahren nach Anspruch 10, wobei der Schritt der Erhitzung in der Mikrowelle des Bechers, welcher das Ei und die Inhalte des ersten, zweiten und dritten Beutels enthält, des Weiteren die Schritte der Erhitzung in der Mikrowelle für eine erste Zeitdauer, gefolgt vom Verrühren des Eis und der Inhalte des ersten, zweiten und dritten Beutels, gefolgt von der Erhitzung in der Mikrowelle für eine zweite Zeitdauer umfasst.

12. Verfahren nach Anspruch 11, wobei die zweite Zeitdauer kürzer ist als die erste Zeitdauer.

13. Verfahren nach Anspruch 12, wobei die erste Zeitdauer und die zweite Zeitdauer gesamt weniger als 90 Sekunden betragen.

14. Verfahren zur Zusammenstellung des abgepackten Lebensmittelprodukts nach Anspruch 1, wobei das Verfahren umfasst:
Anordnung des ersten Beutels durch die Öffnung und im Innenraum des Bechers;
Anordnung des zweiten Beutels durch die Öffnung und im Innenraum des Bechers; und
Verschließen der Öffnung des Bechers unter Verwendung der Membran.

15. Verfahren nach Anspruch 14, wobei ein dritter Beutel an dem ersten Beutel befestigt ist, und wobei der Schritt der Anordnung des ersten Beutels optional die Anordnung des dritten Beutels einschließt,
wobei der erste und dritte Beutel den zweiten Beutel vom Boden des Bechers anheben,
und wobei weiter optional das Verfahren des Weiteren die Anbringung eines Schrumpfetiketts am Becher umfasst.

## Revendications

1. Produit alimentaire emballé (10) comprenant un bol rigide pouvant être utilisé au micro-ondes (20) ayant un rebord (28) définissant une ouverture généralement circulaire (26) vers un intérieur du bol, une base (24), et une paroi latérale (22) s'étendant entre le rebord et la base, un premier sachet souple (38) disposé dans l'intérieur du bol, un deuxième sachet souple (42) disposé dans l'intérieur du bol et contenant un ou plusieurs légumes acidifiés ayant un pH compris entre 3,5 et 5,0, et une membrane souple (34) scellée au rebord du bol pour bloquer l'ouverture avant un retrait au moins partiel de la membrane.

2. Produit alimentaire emballé selon la revendication 1, dans lequel :
i) le bol contient éventuellement des morceaux de fromage ; et/ou
ii) un diamètre de la base du bol est inférieur au diamètre de l'ouverture, facultativement
dans lequel le diamètre de la base du bol est entre environ 55 % et 75 % inférieur au diamètre de l'ouverture, et en outre facultativement
dans lequel le diamètre de l'ouverture est compris entre environ 120 % et 140 % d'une hauteur du bol.

3. Produit alimentaire emballé selon l'une quelconque des revendications 1, comprenant en outre un troisième sachet souple (46) contenant une pluralité de morceaux d'un produit carné.

4. Produit alimentaire emballé selon la revendication 3, dans lequel les premier et troisième sachets souples sont réunies par une selle (50).

5. Procédé de fabrication d'un produit alimentaire réchauffé au micro-ondes en utilisant le produit alimentaire emballé selon la revendication 1, le procédé comprenant les étapes consistant à :
retirer au moins partiellement la membrane pour fournir un accès à l'intérieur du bol ;
retirer les premier et deuxième sachets depuis l'intérieur du bol via l'ouverture ;
ajouter un œuf à l'intérieur du bol via l'ouverture en cassant un œuf frais non fourni avec le produit alimentaire emballé ;
mélanger ou remuer l'œuf dans le bol ;
ouvrir les premier et deuxième sachets ;
ajouter le contenu les premier et deuxième sachets à l'intérieur du bol via l'ouverture ; et
passer au micro-ondes le bol contenant l'œuf et le contenu des premier et deuxième sachets.

6. Procédé selon la revendication 5, dans lequel l'étape d'ajout de l'œuf survient après l'étape d'ajout du contenu des premier et deuxième sachets.

7. Procédé selon la revendication 5, dans lequel l'étape de réchauffage au micro-ondes du bol contenant l'œuf et le contenu des premier et deuxième sachets comprend en outre les étapes de réchauffage au micro-ondes pendant une première période de temps, suivie par un mélange de l'œuf et du contenu des premier et deuxième sachets, suivie par un réchauffage au micro-ondes pendant une seconde période de temps.

8. Procédé selon la revendication 7, dans lequel la seconde période de temps est inférieure à la première période de temps.

9. Procédé de fabrication d'un produit alimentaire réchauffé au micro-ondes en utilisant le produit alimentaire emballé selon la revendication 3, le procédé comprenant les étapes consistant à :
retirer au moins partiellement la membrane pour permettre un accès à l'intérieur du bol ;
retirer les premier, deuxième et troisième sachets de l'intérieur du bol via l'ouverture ;
ajouter un œuf à l'intérieur du bol via l'ouverture en cassant un œuf frais non fourni avec le produit alimentaire emballé ;
mélanger ou remuer l'œuf dans le bol ;
ouvrir les premier, deuxième et troisième sachets ;
ajouter le contenu des premier, deuxième et troisième sachets à l'intérieur du bol via l'ouverture ; et
réchauffer au micro-ondes le bol contenant l'œuf et le contenu des premier, deuxième et troisième sachets.

10. Procédé selon la revendication 9, dans lequel l'étape d'ajout de l'œuf survient après l'étape d'ajout du contenu des premier, deuxième et troisième sachets.

11. Procédé selon la revendication 10, dans lequel l'étape de réchauffage au micro-ondes du bol contenant l'œuf et le contenu des premier, deuxième et troisième sachets comprend en outre les étapes de réchauffage au micro-ondes pendant une première période de temps, suivie par le mélange de l'œuf et du contenu des premier, deuxième et troisième sachets, suivie d'un réchauffage au micro-ondes pendant une seconde période de temps.

12. Procédé selon la revendication 11, dans lequel la seconde période de temps est inférieure à la première période de temps.

13. Procédé selon la revendication 12, dans lequel la première période de temps et la seconde période de temps sont en cumulé inférieures à 90 secondes.

14. Procédé d'assemblage du produit alimentaire emballé selon la revendication 1, le procédé comprenant les étapes consistant à :
déposer le premier sachet à travers l'ouverture et dans l'intérieur du bol ;
déposer le deuxième sachet à travers l'ouverture et dans l'intérieur du bol ; et
refermer l'ouverture du bol à l'aide de la membrane.

15. Procédé selon la revendication 14, dans lequel un troisième sachet est fixé au premier sachet, et dans lequel l'étape consistant à déposer le premier sachet comprend le dépôt du troisième sachet, facultativement
dans lequel les premier et troisième sachets élèvent le deuxième sachet depuis la base du bol, et en outre facultativement
dans lequel le procédé comprend en outre l'application d'une étiquette thermorétractable sur le bol.
